# EUROPÄISCHE PATENTSCHRIFT

(11) **EP 3 736 464 B1**
(45) Veröffentlichungstag und Bekanntmachung des Hinweises auf die Patenterteilung: **19.07.2023**
(21) Anmeldenummer: 20173660.0
(22) Anmeldetag: 08.05.2020
(51) Int. Cl.: F16F 1/373

(54) **ABSTANDHALTER FÜR EINE BEFESTIGUNGSANORDNUNG, BEFESTIGUNGSANORDNUNG MIT EINEM SOLCHEN ABSTANDHALTER SOWIE VERFAHREN ZUM BEFESTIGEN EINES MONTAGETEILS AN EINEM TRÄGERTEIL**
SPACER FOR A FASTENING ARRANGEMENT, FASTENING ARRANGEMENT WITH SUCH A SPACER AND METHOD FOR FASTENING AN ASSEMBLY PART TO A SUPPORT PART
ENTRETOISE POUR UN AGENCEMENT DE FIXATION, AGENCEMENT DE FIXATION DOTÉ D'UNE TELLE ENTRETOISE AINSI QUE PROCÉDÉ DE FIXATION D'UNE PIÈCE DE MONTAGE SUR UNE PIÈCE DE SUPPORT

(30) Priorität: 22.05.2019 DE 102019113663; 10.05.2019 EP 19173895
(43) Veröffentlichungstag der Anmeldung: 11.11.2020
(73) Patentinhaber: Illinois Tool Works Inc., Glenview, IL 60025 (US)
(72) Erfinder: Düll, Florian, Glenview, IL 60025 (US); Klein, Torsten, Glenview, IL 60025 (US); Sbongk, Albert, Glenview, IL 60025 (US)
(74) Vertreter: HGF

(56) Entgegenhaltungen:
- DE-A1-102005 010 433
- DE-A1-102006 052 213
- US-A- 5 295 652

## Beschreibung

Die vorliegende Erfindung betrifft allgemein Vorrichtungen zum Befestigen oder Sichern von Bauelementen oder Maschinenteilen untereinander sowie entsprechende Befestigungsverfahren.

Im Einzelnen betrifft die Erfindung insbesondere ein verbessertes Befestigungssystem mit Schwingungskompensation sowie Komponenten eines solchen Befestigungssystems.

Ein möglicher Anwendungsbereich der Erfindung ist die Automobiltechnik. Ein Anwendungsfall ist beispielsweise die Befestigung eines Lautsprechers an einem Substrat, wobei der Lautsprecher entkoppelt werden muss. Ein anderer Anwendungsfall ist die Befestigung eines Steuergerätes.

Montageteile, beispielsweise Lautsprecher, Steuergeräte oder dergleichen, sind häufig mit Befestigungslöchern versehen, mit denen sie über Schrauben an einem Gegenteil, insbesondere Trägerteil, etwa einem Trägersubstrat, befestigbar sind.

Vielfach ist es erwünscht, dass die Montageteile schwingungsgedämpft fixiert sind.

In diesen Fällen kommen üblicherweise manschettenförmige Abstandhalter aus einem elastischen, gummiartigen Werkstoff, wie beispielsweise einem Ethylen-Propylen-Dien-Kautschuk (EPDM), zum Einsatz. Der Abstandhalter hat die Aufgabe die Schraube oder ganz allgemein einen Montagebolzen vom Montageteil, zum Beispiel einem Lautsprecher, so zu distanzieren, dass kein direkter Kontakt zwischen Montagebolzen und Montageteil sowie zum Trägerteil, wie beispielsweise Trägersubstrat, besteht.

Der Abstandhalter dient nicht nur zu dieser Distanzierung, sondern insbesondere auch zur Vermeidung einer Schwingungsübertragung zwischen den miteinander verbundenen Teilen mit der Folge, dass eine gegenseitige Schwingungsbeeinflussung unterbleibt oder zumindest minimiert ist und Geräuschentwicklungen unterdrückt sind.

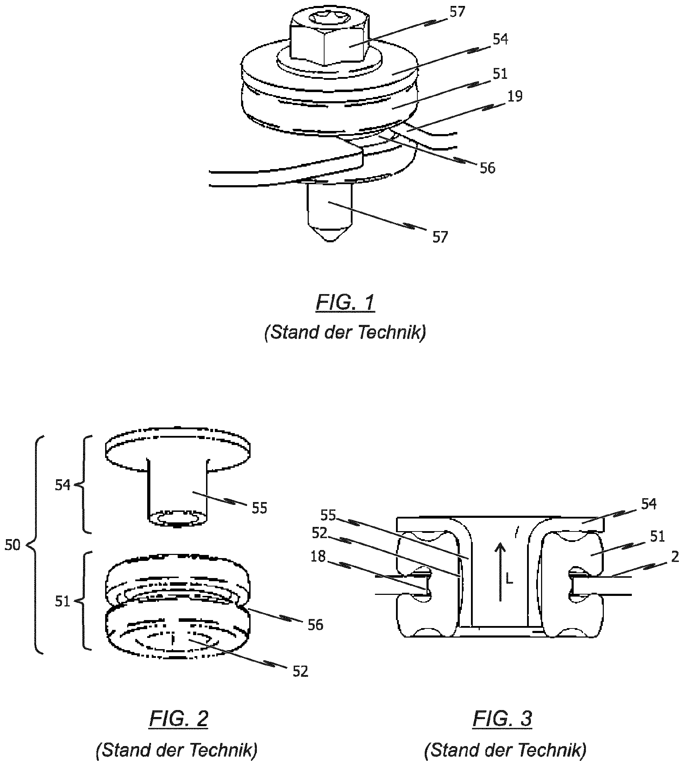

Eine derartige aus dem Stand der Technik allgemein bekannte Befestigungsanordnung ist schematisch und in einer isometrischen Ansicht in FIG. 1 gezeigt, während FIG. 2 ebenfalls in einer schematischen und isometrischen Ansicht den bei der Befestigungsanordnung gemäß FIG. 1 zum Einsatz kommenden Abstandhalter 50 in einer Explosionsdarstellung zeigt. FIG. 3 zeigt eine Schnittansicht des Abstandhalters 50 in einem Zustand, in welchem er an einem Montageteil 2 befestigt ist.

Die Befestigungsanordnung dient zum schwingungsgedämpften Befestigen eines Montageteils 2 an einem Trägerteil und weist hierzu einen Abstandhalter 50 mit einem ring- oder hülsenförmigen Grundkörper 51 aus einem elastischen, gummiartigen Werkstoff auf. Der Grundkörper 51 ist mit einer längs seiner Längsachse L verlaufenden Durchgangsbohrung 52 versehen, in welcher der Schaftbereich 55 einer Montagehülse 54 aufgenommen ist. Die Montagehülse 54 selber ist bei der herkömmlichen in den FIG. 1 bis FIG. 3 gezeigten Befestigungsanordnung aus Metall, insbesondere Aluminium, gefertigt.

Der ring- bzw. hülsenförmige Grundkörper 51 des Abstandhalters 50 ist mit einem umlaufenden Spaltbereich 56 (Ringspalt) versehen, in welchem bzw. von welchem die Umrandung (Randbereich) eines in dem Montageteil 2 ausgebildeten Befestigungsloches 18 bereichsweise aufgenommen ist.

Um den Abstandhalter 50 an dem Montageteil 2 zu befestigen, wird dieser in das offene Langloch 18, 19 eingeschoben. Anschließend wird eine Schraube 57 in die Montagehülse 54 eingeführt und mit einem in FIG. 1 nicht explizit gezeigten Trägerteil verschraubt.

Damit der vom Schraubenkopf der Schraube 57 ausgeübte Fixierdruck auf das Trägerteil übertragen werden kann, mit welchem das Montageteil 2 zu verbinden ist, ist die bereits genannte Montagehülse 54 vorgesehen. Die Montagehülse 54 durchsetzt im Montagezustand das Durchgangsloch 52 in dem elastischen Grundkörper 51 des Abstandhalters 50 und ist - wie bereits ausgeführt - ihrerseits vom Schaft 55 der Montageschraube 57 durchgriffen.

Die Montage des aus dem elastischen Grundkörper 51 und der Montagehülse 54 bestehenden Abstandhalters 50 im Befestigungsloch 18 des Montageteils 2 ist nicht unproblematisch, gleichgültig ob der elastische Grundkörper 51 zunächst in seine Soll-Position in das Befestigungsloch 18 eingeführt ist, bevor die Montagehülse 54 eingesteckt wird, oder ob die Einführung des Grundkörpers 51 in auf die Montagehülse 54 aufgesetztem Zustand vorgenommen wird. Dies liegt unter anderem daran, dass aufgrund der Elastizität des ring- bzw. hülsenförmigen Grundkörpers 51 der Abstandhalter 50 beim Einschieben in das Befestigungsloch 18 dazu neigt, gestaucht oder andersartig deformiert zu werden, wobei die Gefahr besteht, dass der Abstandhalter 50 unter Umständen fehlerhaft in dem Befestigungsloch des Montageteils 2 montiert ist, was die Festigkeit einer Fixierung des Montageteils 2 am Trägerteil beeinflussen kann.

Darüber hinaus erfordert die Montage des Abstandhalters 50 in dem im Montageteil 2 ausgebildeten Befestigungsloch 18, dass dieses Befestigungsloch 18 nach außen geöffnet sein muss und einen Einführschlitz 19 für den Abstandhalter 50 bereitstellen muss. Von daher ist die Verbindung zwischen dem Abstandhalter 50 und dem Montageteil 2 geschwächt.

Auch besteht grundsätzlich die Gefahr, dass in einem vormontierten Zustand der Abstandhalter 50 wieder aus dem Befestigungsloch 18 in dem Montageteil 2 herausrutscht bzw. nicht mehr ordnungsgemäß in dem Befestigungsloch 18 des Montageteils 2 befestigt ist.

In der US 5,295,652 A ist eine Tüllenanordnung zum Aufhängen von Gegenständen an einem Aufhängungsrahmen beschrieben. Die Tüllenanordnung weist einen ersten Flanschbereich, einen zweiten Flanschbereich und einen Durchgang auf. Die Tüllenanordnung besteht aus einem ersten Körperteil und einem zweiten Körperteil. Die zwei Körperteile sind mittels einer Nut und einem Umfangswulst miteinander verbindbar. Die zwei Körperteile weisen jeweils eine Oberfläche auf.

Aus der DE 10 2006 052 213 A1 geht eine Vorrichtung zur Befestigung eines Gehäuses an einem Befestigungsflansch eines Fahrzeugs hervor, welche eine mit einer Ringnut versehene Gummitülle aufweist. Die Gummitülle ist zweiteilig ausgebildet. Das erste Teilstück ist mit einem Hinterschnitt versehen. Nach dem Aufsetzen des zweiten Teilstücks auf das erste Teilstück sind die beiden Teilstücke der Gummitülle fest miteinander und auch fest mit dem Gehäuse verbunden. Dies ermöglicht eine Vormontage des Gehäuses mit daran befestigter Gummitülle, da die Gummitülle durch ein Einrasten des zweiten Teilstückes in der Hinterschneidung des ersten Teilstückes fest mit dem Gehäuse verbunden ist.

In der DE 10 2005 010 433 A1 ist ein Dämpfungslager beschrieben. Dieses Dämpfungslager umfasst zwei Lagerteile, die mit Auflagebereichen aufeinander abgewandten Seiten eines zu haltenden Blechbauteils entlang eines eine Durchgangsöffnung des Bauteils umfassenden Umfangsbereichs am Bauteil anliegen. Die beiden Lagerteile des Dämpfungslagers bestehen aus elastomerem Werkstoff und sind mittels eines Befestigungsmittels im Bereich der Durchgangsöffnung durchdrungen und im rechten Winkel zu den Auflagebereichen verspannt.

Davon ausgehend liegt der Erfindung die Aufgabe zu Grunde ein optimiertes Befestigungssystem eines Montageteils an einem Trägerteil zu schaffen, welches die Sicherheit einer unverlierbaren Vormontage verbessert, eine Montage begünstigt und sowohl für den Entkopplungs- als auch für den harten Schraubfall einsetzbar ist.

Diese Aufgabe wird insbesondere durch einen Abstandhalter für eine Befestigungsanordnung zum insbesondere schwingungsgedämpften Befestigen eines Montageteils an einem Trägerteil gemäß dem unabhängigen Patentanspruch 1 gelöst, wobei vorteilhafte Weiterbildungen des erfindungsgemäßen Abstandhalters in den entsprechenden abhängigen Ansprüchen angegeben sind.

Die der Erfindung zu Grunde liegende Aufgabe wird ferner durch eine Befestigungsanordnung gemäß dem nebengeordneten Patentanspruch 12 gelöst.

Die Erfindung betrifft ferner ein Verfahren zum insbesondere schwingungsgedämpften Befestigen eines Montageteils an einem Trägerteil gemäß dem nebengeordneten Patentanspruch 14.

Demgemäß betrifft die Erfindung insbesondere einen Abstandhalter für eine Befestigungsanordnung zum insbesondere schwingungsgedämpften Befestigen eines Montageteils an einem Trägerteil, wobei der Abstandhalter einen insbesondere ring- oder hülsenförmigen Grundkörper aufweist mit einem ersten Flanschbereich und einem in Längsrichtung des Grundkörpers gesehen gegenüberliegenden zweiten Flanschbereich sowie mit einem insbesondere parallel zur Längsrichtung verlaufenden Durchgang. In dem Durchgang ist ein mit dem Trägerteil verbundener oder zu verbindender Befestiger, insbesondere ein Schraubenschaft einer Befestigungsschraube, zumindest bereichsweise aufnehmbar.

Erfindungsgemäß ist insbesondere vorgesehen, dass der Grundkörper mindestens zweiteilig ausgeführt ist und ein erstes Körperteil und mindestens ein weiteres, zweites Körperteil aufweist, wobei diese Körperteile zum Ausbilden des Grundkörpers miteinander insbesondere lösbar verbindbar sind. Im verbundenen Zustand der Körperteile, also dann, wenn der eigentliche Grundkörper des Abstandhalters ausgebildet ist, ist zwischen dem ersten und zweiten Flanschbereich des Grundkörpers ein insbesondere zumindest im Wesentlichen ringförmiger Spaltbereich vorgesehen, in welchem oder von welchem die Umrandung eines in dem Montageteil ausgebildeten Befestigungsloches zumindest bereichsweise aufnehmbar ist.

Durch den mehrteiligen Aufbau des Grundkörpers des Abstandhalters sind - im Vergleich zu herkömmlichen Abstandshaltern - wesentliche Vorteile insbesondere bei der Vormontage des Abstandhalters am Montageteil möglich. Zum einen kann der erfindungsgemäße Abstandhalter auch in Befestigungslöchern des Montageteils vormontiert werden, welche ohne einen entsprechenden Einführschlitz zum Einführen des Abstandhalters vorgesehen sind. Vielmehr erlaubt es der mehrteilige Aufbau des Grundkörpers, dass das erste Körperteil des Grundkörpers des Abstandhalters von einer ersten Seite auf das Befestigungsloch des Montageteils und das zweite Körperteil des Grundkörpers des Abstandhalters von einer zweiten Seite auf das Befestigungsloch des Montageteils gesetzt werden und anschließend die Körperteile miteinander verbunden werden, so dass ein im ersten und zweiten Flanschbereich des Abstandhalters verbindender Schaftbereich durch das Befestigungsloch im Montageteil läuft. Auf diese Weise ist sichergestellt, dass in einem Zustand, wenn mit Hilfe eines durch den Durchgang des Abstandhalters laufenden Befestigers (insbesondere Befestigungsschraube) das Montageteil über den Abstandhalter mit dem Trägerteil verbunden ist, die über den Befestiger auf den Abstandhalter übertragende Kraft gleichmäßig in den gesamten Umfangsbereich des Befestigungsloches eingeführt wird. Somit ist eine sichere und gleichmäßige Fixierung bzw. Befestigung des Montageteils an dem Trägerteil realisierbar. Insbesondere kann sich der Abstandhalter vollständig an dem Umfangsbereich des Befestigungsloches in dem Montageteil abstützen.

Darüber hinaus ermöglicht die zwei- oder mehrteilige Ausführung des Grundkörpers eine unverlierbare Vormontage des Abstandhalters am Montageteil.

Der Abstandhalter ist sowohl für den harten Schraubfall als auch für eine elastisch entkoppelte Verschraubung geeignet. Fertigungs- und Wärmetoleranzen können durch ein Spiel zwischen dem zumindest im Wesentlichen ringförmigen Spaltbereich des Grundkörpers und dem in dem Montageteil ausgebildeten Befestigungsloch kompensiert werden.

Darüber hinaus kann der gesamte Abstandhalter aus Kunststoff insbesondere mit Hilfe eines Mehrkomponenten-Spritzgussverfahrens gebildet werden.

Um eine elastische Entkopplung und somit eine schwingungsgedämpfte Befestigung des Montageteils an dem Trägerteil zu ermöglichen, ist gemäß dem erfindungsgemäßen Abstandhalters zumindest der erste und zweite Flanschbereich des Grundkörpers aus einer ersten Kunststoffkomponente gebildet, während eine den Spaltbereich zumindest bereichsweise begrenzende Oberfläche aus einer im Vergleich zur ersten Kunststoffkomponente weicheren, zweiten Kunststoffkomponente gebildet ist.

Gemäß Realisierungen des erfindungsgemäßen Abstandhalters ist vorgesehen, dass der erste Flanschbereich eine zumindest im verbundenen Zustand der Körperteile in Richtung des zweiten Flanschbereiches zeigende, insbesondere zumindest im Wesentlichen ringförmige Oberfläche aufweist, welche im verbundenen Zustand der Körperteile den Spaltbereich in Richtung des ersten Flanschbereiches begrenzt. Ferner ist vorgesehen, dass der zweite Flanschbereich eine zumindest im verbundenen Zustand der Körperteile in Richtung des ersten Flanschbereiches zeigende, insbesondere zumindest im Wesentlichen ringförmige Oberfläche aufweist, welche im verbundenen Zustand der Körperteile den Spaltbereich in Richtung des zweiten Flanschbereiches begrenzt.

Bei dieser Realisierung des erfindungsgemäßen Abstandhalters ist es denkbar, dass die zumindest im verbundenen Zustand der Körperteile in Richtung des zweiten Flanschbereiches zeigende Oberfläche des ersten Flanschbereiches und/oder die zumindest im verbundenen Zustand der Körperteile in Richtung des ersten Flanschbereiches zeigende Oberfläche des zweiten Flanschbereiches zumindest bereichsweise mit einer Zahnung oder mit entsprechend von der Oberfläche hervorstehenden Bereichen versehen sind/ist. Die Zahnung oder die entsprechend hervorstehenden Bereiche können zumindest teil- oder bereichsweise aus einer Kunststoffkomponente gebildet sein, welche weicher ist als die Kunststoffkomponente, aus welcher der erste und zweite Flanschbereich des Abstandhalters gebildet sind, um eine möglichst optimale schwingungsgedämpfte Befestigung des Montageteils an dem Trägerteil realisieren zu können.

Gemäß Ausführungsformen des erfindungsgemäßen Abstandhalters ist vorgesehen, dass zumindest im verbundenen Zustand der Körperteile der Grundkörper des Abstandhalters einen den ersten Flanschbereich mit dem zweiten Flanschbereich verbindenden und den Durchgang durch den Abstandhalter bzw. durch den Grundkörper zumindest bereichsweise umgebenden Schaftbereich aufweist, dessen Durchmesser geringer als der Durchmesser des ersten und zweiten Flanschbereiches ist. Bei dieser Ausführungsform ist es denkbar, dass die Mantelfläche des Schaftbereiches zumindest bereichsweise in - im Hinblick auf die Längsrichtung des Grundkörpers - radialer Richtung den Spaltbereich begrenzt. Die Mantelfläche des Schaftbereiches kann zumindest bereichsweise aus einer Kunststoffkomponente gebildet sein, die weicher als die Kunststoffkomponente ist, aus welcher der erste und zweite Flanschbereich des Grundkörpers gebildet sind.

Gemäß Realisierungen der zuletzt genannten Ausführungsformen des Abstandhalters ist vorgesehen, dass die Mantelfläche des Schaftbereiches mit einer Zahnung oder entsprechend von der Mantelfläche radial hervorstehenden Bereichen versehen ist. Die Zahnung oder die entsprechend hervorstehenden Bereiche kann/können zumindest teil- oder bereichsweise aus einer Kunststoffkomponente gebildet sein, welche weicher als die Kunststoffkomponente ist, aus welcher der erste und zweite Flanschbereich gebildet sind.

Zum Ausbilden des Grundkörpers können die Körperteile des Grundkörpers insbesondere über eine Steckverbindung miteinander vorzugsweise lösbar verbindbar sein.

Hierzu kann das erste Körperteil mindestens ein erstes, als aufnehmendes oder aufzunehmendes Steckerteil ausgebildetes Steckverbindungsteil und das mindestens eine zweite Körperteil des Grundkörpers mindestens ein entsprechend hierzu komplementär ausgebildetes zweites Steckverbindungsteil aufweisen. Allerdings ist die Erfindung nicht auf Abstandhalter beschränkt, bei denen die Körperteile des Grundkörpers über eine Steckverbindung insbesondere lösbar verbindbar sind. Beispielsweise wäre grundsätzlich auch eine Klebverbindung zwischen den Körperteilen des Grundkörpers oder eine Schraubverbindung denkbar.

Um die Fertigungskosten des Abstandhalters möglichst gering zu halten, ist dieser als zumindest Zweikomponenten-Kunststoffspritzgussteil ausgebildet, wobei eine erste Kunststoffkomponente insbesondere die Flanschbereiche und den Durchgang des Abstandhalters bildet, und wobei die zweite Kunststoffkomponente weicher als die erste Kunststoffkomponente ist und zumindest bereichsweise den zumindest im Wesentlichen ringförmigen Spaltbereich im Grundkörper bildet.

Insbesondere ist gemäß bevorzugten Realisierungen des erfindungsgemäßen Abstandhalters vorgesehen, dass der Grundkörper insgesamt zweiteilig aufgebaut ist und ein erstes sowie ein identisch hierzu aufgebautes zweites Körperteil aufweist, wobei zum Ausbilden des Grundkörpers das erste und das hierzu identisch aufgebaute zweite Körperteil miteinander vorzugsweise lösbar verbindbar sind.

Die Erfindung betrifft ferner eine Befestigungsanordnung zum insbesondere schwingungsgedämpften Befestigen eines Montageteils an einem Trägerteil, wobei die Befestigungsanordnung einen Abstandhalter der zuvor genannten erfindungsgemäßen Art aufweist. Von dem Spaltbereich des Abstandhalters ist die Umrandung eines in dem Montageteil ausgebildeten Befestigungsloches zumindest bereichsweise aufnehmbar. Die Befestigungsanordnung weist ferner einen mit dem Trägerteil insbesondere lösbar verbundenen oder verbindbaren Befestiger auf, welcher beispielsweise in Gestalt einer Befestigungsschraube ausgeführt ist.

Der Befestiger (Befestigungsschraube) weist einen Kopfbereich auf, dessen Durchmesser größer als der Durchmesser des durch den Grundkörper des Abstandhalters verlaufenden Durchganges ist.

Der Befestiger weist ferner einen Schaftbereich auf, dessen Durchmesser kleiner als der Durchmesser des durch den Grundkörper des Abstandhalters verlaufenden Durchganges ist, wobei der Schaftbereich des Befestigers zumindest bereichsweise von dem Durchgang in dem Abstandhalter aufgenommen oder aufnehmbar ist.

Ein dem Kopfbereich des Befestigers gegenüberliegender Endbereich des Schaftbereiches ist insbesondere kraft- und/oder formschlüssig mit dem Trägerteil verbunden oder verbindbar. Hierzu ist es denkbar, dass zumindest der dem Kopfbereich des Befestigers gegenüberliegende Endbereich des Schaftbereiches mit einem entsprechenden Schraubgewinde versehen ist, wobei die Erfindung jedoch nicht auf Schraubverbindungen festgelegt ist.

Gemäß Ausführungsformen der erfindungsgemäßen Befestigungsanordnung weist diese ferner eine in einer Öffnung, insbesondere in einer Bohrung des Trägerteils aufgenommene oder aufnehmbare Befestigungshülse auf, von welcher zumindest bereichsweise insbesondere der Endbereich des Schaftbereiches des Befestigers insbesondere kraft- und/oder formschlüssig aufgenommen oder aufnehmbar ist.

Im Hinblick auf das erfindungsgemäße Befestigungsverfahren ist vorgesehen, dass eine Befestigungsanordnung der zuvor genannten erfindungsgemäßen Art bereitgestellt wird. Des Weiteren wird ein Befestigungsloch in dem Montageteil ausgebildet, wobei das Befestigungsloch vorzugsweise eine durchgehende, d.h. ununterbrochene, Umrandung aufweist.

Anschließend wird der Abstandhalter der Befestigungsanordnung an dem Montageteil montiert, und zwar indem das erste Körperteil des Grundkörpers des Abstandhalters von einer ersten Seite auf das Befestigungsloch in dem Montageteil und das zweite Körperteil des Grundkörpers des Abstandhalters von einer gegenüberliegenden zweiten Seite auf das Befestigungsloch des Montageteils gesetzt und die Körperteile anschließend miteinander verbunden werden.

Nach dem Verbinden der Körperteile des Grundkörpers läuft ein den ersten und zweiten Flanschbereich des Abstandhalters verbindender Schaftbereich durch das Befestigungsloch.

Anschließend wird der Befestiger der Befestigungsanordnung durch den Durchgang des Abstandhalters geführt und mit dem Trägerteil verbunden.

Nachfolgend wird unter Bezugnahme auf die beiliegenden Zeichnungen eine exemplarische Ausführungsform der erfindungsgemäßen Befestigungsanordnung näher beschrieben.

Es zeigen:
- FIG. 1: schematisch und in einer isometrischen Ansicht eine aus dem Stand der Technik allgemein bekannte, herkömmliche Befestigungsanordnung zum schwingungsgedämpften Befestigen eines Montageteils an einem Trägerteil, wobei FIG. 1 die Befestigungsanordnung in einem montierten Zustand zeigt;
- FIG. 2: schematisch und in einer isometrischen Explosionsdarstellung ein bei der Befestigungsanordnung gemäß FIG. 1 zum Einsatz kommende Abstandhalter;
- FIG. 3: schematisch und in einer Schnittansicht den Abstandhalter gemäß FIG. 2 in einem am Montageteil vormontierten Zustand;
- FIG. 4: schematisch und in einer isometrischen Explosionsdarstellung eine erste exemplarische Ausführungsform des erfindungsgemäßen Abstandhalters für eine Befestigungsanordnung zum insbesondere schwingungsgedämpften Befestigen eines Montageteils an einem Trägerteil, wobei in FIG. 4 die beiden den Grundkörper des Abstandhalters ausbildenden Körperteile noch nicht miteinander verbunden sind;
- FIG. 5: schematisch und in einer isometrischen Ansicht ein erstes Körperteil des Grundkörpers des Abstandhalters gemäß FIG. 4;
- FIG. 6: den Abstandhalter gemäß FIG. 4 in einem Zustand, in welchem die Körperteile zum Ausbilden des Grundkörpers des Abstandhalters miteinander verbunden sind, wobei in FIG. 6 der Abstandhalter in seinem am Montageteil vormontierten Zustand gezeigt ist;
- FIG. 7: schematisch und in einer Schnittansicht eine Befestigungsanordnung zum insbesondere schwingungsgedämpften Befestigen eines Montageteils an einem Trägerteil mit einem Abstandhalter gemäß der ersten exemplarischen Ausführungsform, wobei in FIG. 7 die Befestigungsanordnung im fertigmontierten Zustand gezeigt ist; und
- FIG. 8: schematisch und in einer Schnittansicht den Abstandhalter gemäß der ersten exemplarischen Ausführungsform der vorliegenden Erfindung in einem an einem Montageteil vormontierten Zustand;
- FIG. 9: schematisch und in einer isometrischen Ansicht ein Körperteil eines Grundkörpers eines Abstandhalters gemäß einer zweiten exemplarischen Ausführungsform; und
- FIG. 10: einen Abstandhalter gemäß der zweiten exemplarischen Ausführungsform, welcher einen Grundkörper aus zwei miteinander verbundenen Körperteilen gemäß FIG. 9 aufweist.

In FIG. 1 ist schematisch und in einer isometrischen Ansicht eine aus dem Stand der Technik allgemein bekannte Befestigungsanordnung zum insbesondere schwingungsgedämpften Befestigen eines Montageteils 2 an einem in FIG. 1 nicht gezeigten Trägerteil dargestellt. FIG. 2 zeigt in einer schematischen und isometrischen Explosionsdarstellung einen bei der Befestigungsanordnung gemäß FIG. 1 verwendeten Abstandhalter 50, während FIG. 3 in einer schematischen Schnittansicht den Abstandhalter 50 gemäß FIG. 2 in einem am Montageteil 2 vormontierten Zustand zeigt.

Der bei der herkömmlichen Befestigungsanordnung zum Einsatz kommende Abstandhalter 50 weist einen ring- oder hülsenförmigen Grundkörper 51 aus einem elastischen, gummiartigen Werkstoff, insbesondere Ethylen-Propylen-Dien-Kautschuk, auf und hat die Aufgabe, eine Befestigungsschraube 57 bzw. einen Montagebolzen vom Montageteil 2 so zu distanzieren, dass kein direkter Kontakt zwischen Montagebolzen 57 und Montageteil 2 sowie zum Trägerteil besteht.

Der ring- oder hülsenförmige Grundkörper 51 aus dem elastischen, gummiartigen Werkstoff ist mit einer längs seiner Längsachse L verlaufenden Durchgangsbohrung 52 versehen. Wie es insbesondere der Schnittdarstellung in FIG. 3 entnommen werden kann, ist in dem in dem Grundkörper 51 ausgebildeten Durchgang 52 der Schaftbereich 55 einer aus einem Metall gebildeten Montagehülse 54 zumindest bereichsweise aufgenommen.

An einem Endbereich des Schaftes 55 der Montagehülse 54 ist ein Flanschbereich ausgebildet, welcher einen Durchmesser aufweist, der insbesondere deutlich größer als der Durchmesser des in dem ring- oder hülsenförmigen Grundkörper 51 ausgebildeten Durchganges 52 ist.

Insbesondere ist bei der in FIG. 1 bis FIG. 3 gezeigten, allgemein aus dem Stand der Technik bekannten Befestigungsanordnung vorgesehen, dass der Durchmesser des Flanschbereiches der Montagehülse 54 in etwa dem Durchmesser des ring- bzw. hülsenförmigen Grundkörpers 51 aus dem elastischen, gummiartigen Werkstoff entspricht.

Der ring- bzw. hülsenförmige Grundkörper 51 des Abstandhalters 50 ist mit einem umlaufenden Spaltbereich 56 (Ringspalt) versehen, in welchem bzw. von welchem die Umrandung eines in dem Montageteil 2 ausgebildeten Befestigungsschlitzes 19 zumindest bereichsweise aufgenommen ist.

Im Einzelnen erfordert der Aufbau des Abstandhalters 50 der herkömmlichen Befestigungsanordnung, dass der Abstandhalter 50 nur in ein geöffnetes Befestigungsloch 18 des Montageteils 2, d.h. in ein Befestigungsloch 18 mit einem Einführschlitz 19 eingesetzt werden kann.

Dadurch besteht u.a. die Gefahr, dass der vormontierte Abstandhalter 50 wieder aus dem Befestigungsloch 18 des Montageteils 2 herausrutscht, bevor ein Montagebolzen 57 durch die Montagehülse 54 geführt und an dem Trägerteil fixiert wird.

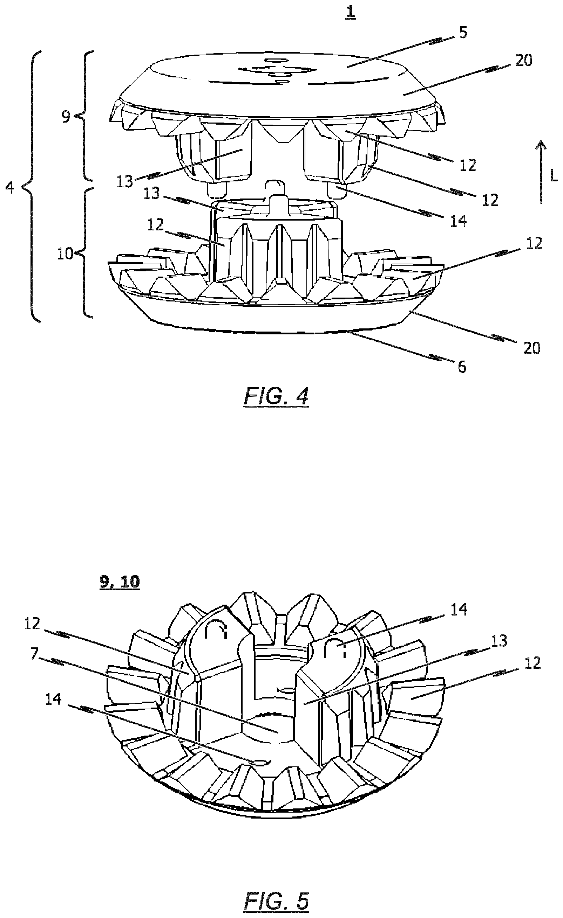

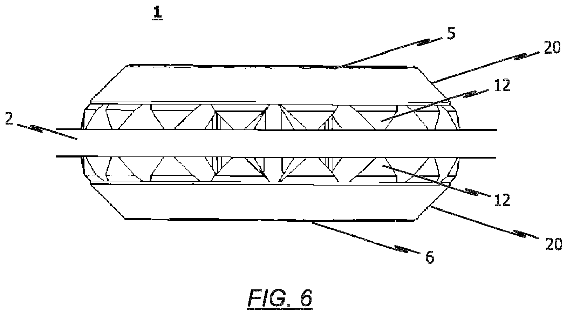

Nachfolgend werden unter Bezugnahme auf die Darstellungen in den FIG. 4 bis FIG. 10 exemplarische Ausführungsformen der erfindungsgemäßen Befestigungsanordnung bzw. Komponenten hiervon, wie insbesondere der Abstandhalter 1, näher beschrieben.

Der Abstandhalter 1 der erfindungsgemäßen Befestigungsanordnung besteht aus einem harten Kunststoffmaterial und einem weicheren Kunststoffmaterial, wobei diese beiden Kunststoffmaterialien vorzugsweise in einem Zweikomponenten-Spritzgussverfahren verarbeitet sind. Insbesondere kann bei dem Abstandhalter 1 gemäß der vorliegenden Erfindung auf eine beispielsweise aus Metall gebildete Montagehülse verzichtet werden.

Der Abstandhalter 1 ist als ring- oder hülsenförmiger Grundkörper 4 ausgeführt, welcher einen ersten Flanschbereich 5 aus dem genannten harten Kunststoffmaterial und einen in Längsrichtung L des Abstandhalters 1 gesehen gegenüberliegenden zweiten Flanschbereich 6 ebenfalls aus dem harten Kunststoffmaterial aufweist. Zwischen dem ersten und zweiten Flanschbereich 5, 6 des Abstandhalters 1 ist ein insbesondere parallel zur Längsrichtung L des Abstandhalters 1 verlaufender Durchgang 7 ausgebildet, in welchem ein mit einem Trägerteil 3 verbundener oder zu verbindender Befestiger 8, insbesondere eine Montageschraube bzw. ein Schraubenschaft einer Montageschraube, zumindest bereichsweise aufnehmbar ist.

Der Abstandhalter 1 ist mehrteilig ausgeführt. Im Einzelnen ist bei den in FIG. 4 bis FIG. 10 gezeigten Ausführungsformen der Abstandhalter 1 genau zweiteilig ausgeführt und besteht aus einem ersten Körperteil 9 und einem weiteren, zweiten Körperteil 10, wobei diese beiden Körperteile 9, 10 zum Ausbilden des Grundkörpers 4 des Abstandhalters 1 bzw. des Abstandhalters 1 miteinander insbesondere lösbar verbindbar sind.

Bei den in den Zeichnungen gezeigten exemplarischen Ausführungsformen der vorliegenden Erfindung wird der Abstandhalter 1 bzw. der Grundkörper 4 des Abstandhalters 1 durch zwei identisch aufgebaute Körperteile 9, 10 gebildet, wobei zum Ausbilden des Abstandhalters 1 diese beiden identisch zueinander aufgebauten Körperteile 9, 10 miteinander vorzugsweise lösbar verbindbar sind.

Durch diesen mehrteiligen Aufbau des Abstandhalters 1 ist dieser in einem in dem Montageteil 2 ausgebildeten Befestigungsloch 18 vormontierbar, wobei diese Anordnung eine Vormontage des Abstandhalters 1 ohne zusätzliche seitliche Öffnung, die mit dem Befestigungsloch 18 des Montageteils 2 verbunden ist, ermöglicht. Im Unterschied zu der beispielsweise in FIG. 1 bis FIG. 3 gezeigten herkömmlichen Befestigungsanordnung, bei welcher zur Vormontage des Abstandhalters 1 dieser seitlich in ein Befestigungsloch 18 des Montageteils 2 eingeführt werden muss und somit eine entsprechende Schlitzöffnung im Montageteil 2 erfordert, kann mit der erfindungsgemäßen Lösung eine Schwächung an dem Befestigungsloch 18 wirksam verhindert werden. Darüber hinaus ist die Vormontage des Abstandhalters 1 robuster und es ist sichergestellt, dass der Abstandhalter 1 nicht mehr aus dem Befestigungsloch 18 des Montageteils 2 herausrutschen kann.

Im verbundenen Zustand der vorzugsweise identisch zueinander ausgebildeten Körperteile 9, 10, d.h. in einem Zustand, in welchem der Abstandhalter 1 ausgebildet ist, ist zwischen dem ersten und zweiten Flanschbereich 5, 6 des Abstandhalters 1 bzw. des Grundkörpers 4 des Abstandhalters 1 ein insbesondere zumindest im Wesentlichen ringförmiger Spaltbereich 11 vorgesehen, in welchem bzw. von welchem die Umrandung eines in dem Montageteil 2 ausgebildeten Befestigungsloches zumindest bereichsweise aufnehmbar ist.

Um die Robustheit bei der Montage des Abstandhalters 1 bzw. die Robustheit im am Montageteil 2 vormontierten Zustand des Abstandhalters 1 zu verbessern, sind die Körperteile 9, 10 des Abstandhalters 1 mit Fixierstiften (Steckverbindungsteil 14) versehen, über welche die Körperteile 9, 10 fest miteinander verbindbar sind.

Beispielsweise ist es in diesem Zusammenhang denkbar, dass zum Ausbilden des Grundkörpers 4 des Abstandhalters 1 die Körperteile 9, 10 über eine Steckverbindung miteinander insbesondere lösbar verbindbar sind, wobei hierzu das erste Körperteil 9 mindestens ein erstes, als aufzunehmendes oder aufnehmendes Steckerteil ausgebildetes Steckverbindungsteil 14 und das mindestens eine zweite Körperteil 10 mindestens ein entsprechend hierzu komplementär ausgebildetes zweites Steckverbindungsteil 14 aufweist.

Eine weitere Steigerung der Robustheit bei der Montage bzw. der Robustheit im vormontierten Zustand des Abstandhalters 1 liegt darin, dass vorzugsweise der erste und zweite Flanschbereich 5, 6 des Abstandhalters 1 als Hart-Kunststoffkomponente ausgebildet ist und dazu dient, zumindest den größten Teil der zur Dämpfung vorgesehenen Weich-Kunststoffkomponente abzudecken. Insbesondere ist bei den in den Zeichnungen gezeigten Ausführungsformen des erfindungsgemäßen Abstandhalters 1 vorgesehen, dass der erste und zweite Flanschbereich 5, 6 mit einer Montagerampe 20 versehen ist, also die äußere den Umfang des Flanschbereiches 5, 6 umgebende Kante abgeschrägt ist. Dadurch wird ein klebriger Kontakt zur Weich-Kunststoffkomponente vermieden, welcher zu Verformungen und/oder zu einem Verrutschen der Teile des Abstandhalters 1 bzw. des Abstandhalters 1 selber führen kann.

Die Weich-Kunststoffkomponenten des Abstandhalters 1 und insbesondere deren Form ist vorzugsweise so gestaltet, dass sie die Materialweichheit durch ihre Entkopplungs-/Dämpfungscharakteristik unterstützt. Beispielsweise können die Weich-Kunststoffkomponenten zumindest bereichsweise in Form von Stacheln oder Zähnen (bzw. hervorstehenden Bereichen/Zahnung 12) vorliegen.

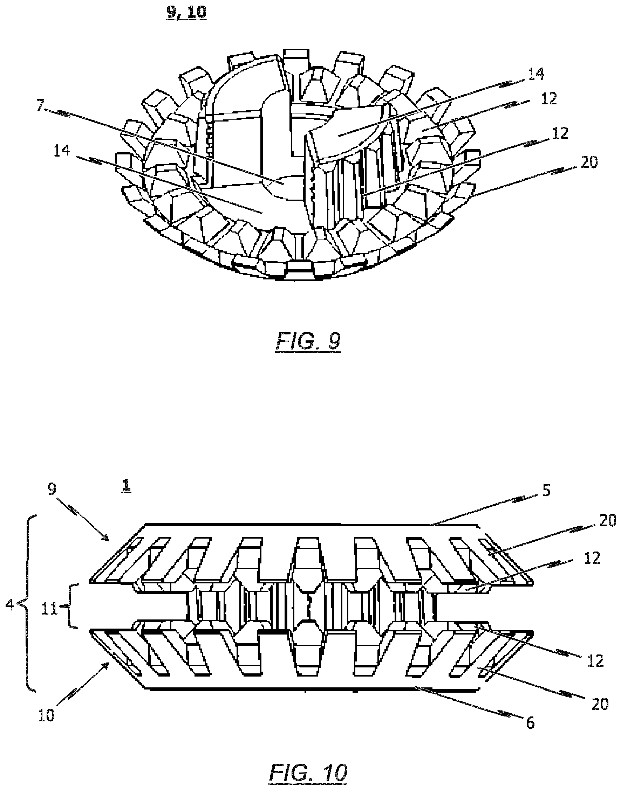

Vorzugsweise an der Außenkante verlängern die Weich-Kunststoffkomponenten die Montagerampe 20 des ersten und zweiten Flanschbereiches 5, 6 in Form von Stacheln. Alternativ könnten diese auch verlängerte Spitzen von Hart-Kunststoffkomponenten sein, wenn eine erhöhte Robustheit erforderlich ist. In diesem Zusammenhang wird auf die in FIG. 9 und FIG. 10 schematisch dargestellte Ausführungsform des Abstandhalters 1 verwiesen.

Bei den in den Zeichnungen gezeigten exemplarischen Ausführungsformen des erfindungsgemäßen Abstandhalters 1 sind der erste und zweite Flanschbereich 5, 6 des Abstandhalters 1 aus einer ersten Kunststoffkomponente gebildet, wobei eine den Spaltbereich 11 begrenzende Oberfläche des Abstandhalters 1 aus einer im Vergleich zur ersten Kunststoffkomponente weicheren, zweiten Kunststoffkomponente gebildet ist.

Bei den exemplarischen Ausführungsformen ist ferner vorgesehen, dass der erste Flanschbereich 5, 6 eine zumindest im verbundenen Zustand der beiden Körperteile 9, 10 in Richtung des zweiten Flanschbereiches 6 zeigende, insbesondere zumindest im Wesentlichen ringförmige Oberfläche aufweist, welche im verbundenen Zustand der Körperteile 9, 10 den Spaltbereich 11 in Richtung des ersten Flanschbereiches 5 begrenzt. Ferner weist der zweite Flanschbereich 6 eine zumindest im verbundenen Zustand der Körperteile 9, 10 in Richtung des ersten Flanschbereiches 5 zeigende, insbesondere zumindest im Wesentlichen ringförmige Oberfläche auf, welche im verbundenen Zustand der Körperteile 9, 10 den Spaltbereich 11 in Richtung des zweiten Flanschbereiches 6 begrenzt. Die zumindest im verbundenen Zustand der Körperteile 9, 10 in Richtung des zweiten Flanschbereiches 6 zeigende Oberfläche des ersten Flanschbereiches 5 sowie die zumindest im verbundenen Zustand der Körperteile 9, 10 in Richtung des ersten Flanschbereiches 5 zeigende Oberfläche des zweiten Flanschbereiches 6 sind dabei zumindest bereichsweise mit einer Zahnung 12 versehen.

Die Zahnung 12 ist zumindest teil- oder bereichsweise aus einer Kunststoffkomponente gebildet, welche weicher als die Kunststoffkomponente ist, aus welcher der erste und zweite Flanschbereich 5, 6 gebildet sind.

Bei den Ausführungsformen des erfindungsgemäßen Abstandhalters 1 ist ferner vorgesehen, dass zumindest im verbundenen Zustand der Körperteile 9, 10 der Grundkörper 4 bzw. der Abstandhalter 1 einen den ersten Flanschbereich 5 mit dem zweiten Flanschbereich 6 verbindenden und den Durchgang 7 zumindest bereichsweise umgebenen Schaftbereich 13 aufweist, welcher vorzugsweise aus der ersten (härteren) Kunststoffkomponente gebildet ist, und dessen Durchmesser geringer als der Durchmesser des ersten und zweiten Flanschbereiches 5, 6 ist. Dabei begrenzt die Mantelfläche des Schaftbereiches 13 zumindest bereichsweise in - im Hinblick auf die Längsrichtung L des Grundkörpers 4 - radialer Richtung den Spaltbereich 11.

Vorzugsweise ist die Mantelfläche des Schaftbereiches 13 zumindest bereichsweise aus einer Kunststoffkomponente gebildet, die weicher als die Kunststoffkomponente ist, aus welcher der erste und zweite Flanschbereich 5, 6 sowie der Schaftbereich 13 des Abstandhalters 1 gebildet sind.

Des Weiteren kann gemäß den in den Zeichnungen gezeigten Ausführungsformen des erfindungsgemäßen Abstandhalters 1 die Mantelfläche des Schaftbereiches 13 mit einer Zahnung 12 versehen sein, welche zumindest teil- oder bereichsweise aus einer Kunststoffkomponente gebildet ist, die weicher als die Kunststoffkomponente ist, aus welcher der erste und zweite Flanschbereich 5, 6 sowie der Schaftbereich 13 des Abstandhalters 1 ist.

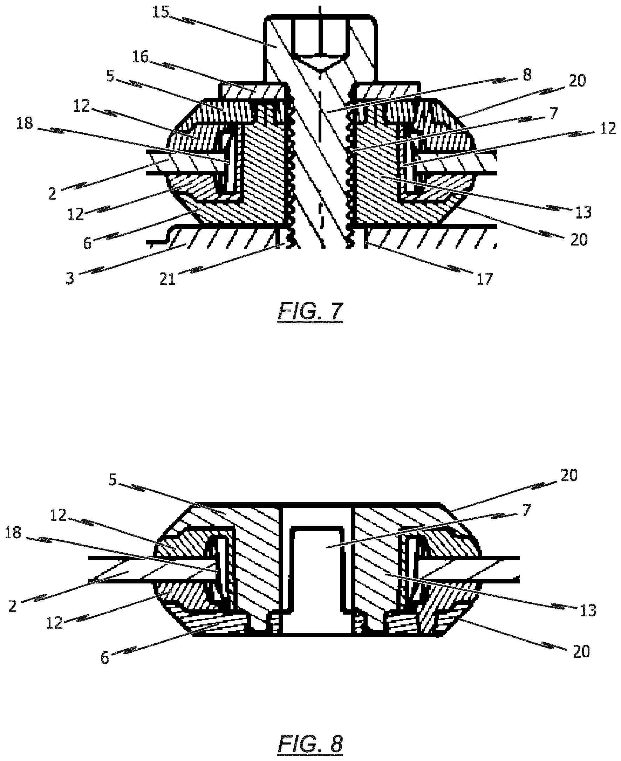

Eine bevorzugte Ausführungsform der gesamten Befestigungsanordnung mit einem erfindungsgemäßen Abstandhalter 1 ist schematisch und in einer Schnittansicht in FIG. 7 gezeigt. Diese Befestigungsanordnung weist einen Abstandhalter 1 gemäß FIG. 8 auf, wobei von dem Spaltbereich 11 dieses Abstandhalters 1 die Umrandung eines in dem Montageteil 2 ausgebildeten Befestigungsloches zumindest bereichsweise aufgenommen ist.

Die Befestigungsanordnung weist ferner einen mit dem Trägerteil 3 insbesondere lösbar verbundenen oder verbindbaren Befestiger 8 insbesondere in Gestalt einer Befestigungsschraube bzw. Montageschraube auf.

Der Befestiger 8 weist einen Kopfbereich 15 auf, dessen Durchmesser größer als der Durchmesser des durch den Grundkörper 4 des Abstandhalters 1 verlaufenden Durchganges 7 ist. Ferner weist der Befestiger 8 einen Schaftbereich auf, dessen Durchmesser kleiner als der Durchmesser des durch den Grundkörper 4 des Abstandhalters 1 verlaufenden Durchganges 7 ist.

Zwischen dem Kopfbereich 15 des Befestigers 8 und dem ersten Flanschbereich 5 des Abstandhalters 1 kann eine Unterlegscheibe 16 vorgesehen sein.

Der Schaftbereich des Befestigers 8 ist zumindest bereichsweise von dem Durchgang 7 des Abstandhalters 1 aufgenommen oder aufnehmbar, wobei in ein dem Kopfbereich 15 des Befestigers 8 gegenüberliegender Endbereich des Schaftbereiches insbesondere kraft- und/oder formschlüssig mit dem Trägerteil 3 verbunden oder verbindbar ist.

Wie in FIG. 7 angedeutet, ist es in diesem Zusammenhang denkbar, dass die Befestigungsanordnung eine in einer Öffnung, insbesondere Bohrung, des Trägerteils 3 aufgenommene oder aufnehmbare Befestigungshülse 21 aufweist, von welcher zumindest bereichsweise insbesondere der Endbereich des Schaftbereiches des Befestigers 8 insbesondere kraft- und/oder formschlüssig aufgenommen oder aufnehmbar ist.

### Bezugszeichenliste

- 1: Abstandhalter
- 2: Montageteil
- 3: Trägerteil 3
- 4: Grundkörper des Abstandhalters
- 5: erster Flanschbereich
- 6: zweiter Flanschbereich
- 7: Durchgang
- 8: Befestiger/Montageschraube
- 9: erstes Körperteil
- 10: zweites Körperteil
- 11: Spaltbereich
- 12: Zahnung
- 13: Schaftbereich
- 14: Steckverbindungsteil
- 15: Kopfbereich des Befestigers
- 16: Unterlegscheibe
- 17: Öffnung im Trägerteil 3
- 18: Befestigungsloch 18 im Montageteil
- 19: Einführschlitz für das Befestigungsloch 18 im Montageteil
- 20: Montagerampe des ersten und zweiten Flanschbereiches
- 21: Befestigungshülse
- L: Längsrichtung des Abstandhalters
- 50: Abstandhalter (Stand der Technik)
- 51: Grundkörper des Abstandhalters (Stand der Technik)
- 52: Durchgangsbohrung im Grundkörper (Stand der Technik)
- 54: Montagehülse (Stand der Technik)
- 55: Schaftbereich der Montagehülse (Stand der Technik)
- 56: Spaltbereich im Grundkörper (Stand der Technik)
- 57: Montageschraube (Stand der Technik)

## Patentansprüche

1. Abstandhalter (1) für eine Befestigungsanordnung zum insbesondere schwingungsgedämpften Befestigen eines Montageteils (2) an einem Trägerteil (3), wobei der Abstandhalter (1) einen insbesondere ring- oder hülsenförmigen Grundkörper (4) aufweist mit einem ersten Flanschbereich (5) und einem in Längsrichtung (L) des Grundkörpers (4) gesehen gegenüberliegenden zweiten Flanschbereich (6) sowie mit einem insbesondere parallel zur Längsrichtung (L) verlaufenden Durchgang (7), in welchem ein mit dem Trägerteil (3) verbundener oder zu verbindender Befestiger (8), insbesondere ein Schraubenschaft einer Befestigungsschraube, zumindest bereichsweise aufnehmbar ist, wobei der Grundkörper (4) mindestens zweiteilig ausgeführt ist und ein erstes Körperteil (9) und mindestens ein weiteres, zweites Körperteil (10) aufweist, wobei die Körperteile (9, 10) zum Ausbilden des Grundkörpers (4) miteinander insbesondere lösbar verbindbar sind, und wobei im verbundenen Zustand der Körperteile (9, 10) zwischen dem ersten und zweiten Flanschbereich (5, 6) des Grundkörpers (4) ein insbesondere zumindest im Wesentlichen ringförmiger Spaltbereich (11) vorgesehen ist, in oder von welchem die Umrandung eines in dem Montageteil (2) ausgebildeten Befestigungsloches (18) zumindest bereichsweise aufnehmbar ist **dadurch gekennzeichnet,**
**dass** zumindest der erste und zweite Flanschbereich (5, 6) des Grundkörpers (4) aus einer ersten Kunststoffkomponente und wobei zumindest bereichsweise eine den Spaltbereich (11) begrenzende Oberfläche aus einer im Vergleich zur ersten Kunststoffkomponente weicheren, zweiten Kunststoffkomponente gebildet ist.

2. Abstandhalter (1) nach Anspruch 1,
wobei die Körperteile (9, 10) des Grundkörpers (4) aus Kunststoff insbesondere mit Hilfe eines Mehrkomponenten-Spritzgussverfahrens gebildet sind.

3. Abstandhalter (1) nach Ansprch 1 oder 2,
wobei der erste Flanschbereich (5) eine zumindest im verbundenen Zustand der Körperteile (9, 10) in Richtung des zweiten Flanschbereiches (6) zeigende, insbesondere zumindest im Wesentlichen ringförmige Oberfläche aufweist, welche im verbundenen Zustand der Körperteile (9, 10) den Spaltbereich (11) in Richtung des ersten Flanschbereiches (5) begrenzt, und wobei der zweite Flanschbereich (6) eine zumindest im verbundenen Zustand der Körperteile (9, 10) in Richtung des ersten Flanschbereiches (5) zeigende, insbesondere zumindest im Wesentlichen ringförmige Oberfläche aufweist, welche im verbundenen Zustand der Körperteile (9, 10) den Spaltbereich (11) in Richtung des zweiten Flanschbereiches (6) begrenzt, wobei vorzugsweise die zumindest im verbundenen Zustand der Körperteile (9, 10) in Richtung des zweiten Flanschbereiches (6) zeigende Oberfläche des ersten Flanschbereiches (5) und/oder vorzugsweise die zumindest im verbundenen Zustand der Körperteile (9, 10) in Richtung des ersten Flanschbereich (5) zeigende Oberfläche des zweiten Flanschbereiches (6) zumindest bereichsweise mit einer Zahnung (12) oder mit entsprechend von der Oberfläche hervorstehenden Bereichen versehen sind/ist.

4. Abstandhalter (1) nach einem der Ansprüche 1 bis 3,
wobei der erste Flanschbereich (5) zumindest bereichsweise aus einer Hart-Kunststoffkomponente gebildet ist und einen Kantenbereich aufweist, welcher in eine der Richtung des zweiten Flanschbereiches (6) entgegengesetzte Richtung zumindest bereichsweise abgeschrägt ist und insbesondere eine Montagerampe (20) aufweist; und/oder wobei der zweite Flanschbereich (6) zumindest bereichsweise aus einer Hart-Kunststoffkomponente gebildet ist und einen Kantenbereich aufweist, welcher in eine der Richtung des ersten Flanschbereiches (5) entgegengesetzte Richtung zumindest bereichsweise abgeschrägt ist und insbesondere eine Montagerampe (20) aufweist.

5. Abstandhalter (1) nach einem der Ansprüche 1 bis 4,
wobei der erste Flanschbereich (5) und/oder der Kantenbereich des ersten Flanschbereiches (5) aus einer ersten Kunststoffkomponente gebildet sind/ist und eine Formgebung aufweisen/aufweist, die so gewählt ist, dass von dem ersten Flanschbereich (5) und/oder seinem Kantenbereich eine insbesondere in oder an dem Spaltbereich (11) vorgesehene, im Vergleich zur ersten Kunststoffkomponente weichere zweite Kunststoffkomponente vor einem direkten Kontakt mit dem Trägerteil (3) abgeschirmt ist; und/oder wobei der zweite Flanschbereich (6) und/oder der Kantenbereich des zweiten Flanschbereiches (6) aus einer ersten Kunststoffkomponente gebildet sind/ist und eine Formgebung aufweisen/aufweist, die so gewählt ist, dass von dem zweiten Flanschbereich (6) und/oder seinem Kantenbereich eine insbesondere in oder an dem Spaltbereich (11) vorgesehene, im Vergleich zur ersten Kunststoffkomponente weichere zweite Kunststoffkomponente vor einem direkten Kontakt mit dem Trägerteil (3) abgeschirmt ist.

6. Abstandhalter (1) nach einem der Ansprüche 1 bis 5,
wobei zumindest im verbundenen Zustand der Körperteile (9, 10) der Grundkörper (4) einen den ersten Flanschbereich (5) mit dem zweiten Flanschbereich (6) verbindenden und den Durchgang (7) zumindest bereichsweise umgebenden Schaftbereich (13) aufweist, dessen Durchmesser geringer als der Durchmesser des ersten und zweiten Flanschbereiches (6) ist.

7. Abstandhalter (1) nach Anspruch 6,
wobei die Mantelfläche des Schaftbereiches (13) zumindest bereichsweise in - im Hinblick auf die Längsrichtung (L) des Grundkörpers (4) - radialer Richtung den Spaltbereich (11) begrenzt.

8. Abstandhalter (1) nach Anspruch 6 oder 7,
wobei die Mantelfläche des Schaftbereiches (13) zumindest bereichsweise aus einer Kunststoffkomponente gebildet ist, die weicher als die Kunststoffkomponente ist, aus welcher der erste und zweite Flanschbereich (5, 6) des Grundkörpers (4) gebildet sind.

9. Abstandhalter (1) nach einem der Ansprüche 6 bis 8,
wobei die Mantelfläche des Schaftbereiches (13) mit einer Zahnung (12) oder entsprechend von der Mantelfläche radial hervorstehenden Bereichen versehen ist.

10. Abstandhalter (1) nach Anspruch 3 oder 9,
wobei die Zahnung (12) oder die entsprechend hervorstehenden Bereiche zumindest teil- oder bereichsweise aus einer Kunststoffkomponente gebildet ist/sind, welche weicher als die Kunststoffkomponente ist, aus welcher der erste und zweite Flanschbereich (5, 6) gebildet sind.

11. Abstandhalter (1) nach einem der Ansprüche 1 bis 10,
wobei zum Ausbilden des Grundkörpers (4) die Körperteile (9, 10) über eine Steckverbindung miteinander insbesondere lösbar verbindbar sind, wobei das erste Körperteil (9) vorzugsweise mindestens ein erstes, als aufnehmendes oder aufzunehmendes Steckerteil ausgebildetes Steckverbindungsteil (14) und das mindestens eine zweite Körperteil (10) vorzugsweise mindestens ein entsprechend hierzu komplementär ausgebildetes zweites Steckverbindungsteil (14) aufweist; und/oder wobei der Grundkörper (4) ein erstes und ein identisch hierzu aufgebautes zweites Körperteil (9, 10) aufweist, wobei zum Ausbilden des Grundkörpers (4) das erste und das hierzu identisch aufgebaute zweite Körperteil (9, 10) miteinander vorzugsweise lösbar verbindbar sind.

12. Befestigungsanordnung zum insbesondere schwingungsgedämpften Befestigen eines Montageteils (2) an einem Trägerteil (3), wobei die Befestigungsanordnung Folgendes aufweist:
- einen Abstandhalter (1) nach einem der Ansprüche 1 bis 11, wobei von dem Spaltbereich (11) des Abstandhalters (1) die Umrandung eines in dem Montageteil (2) ausgebildeten Befestigungsloches (18) zumindest bereichsweise aufnehmbar ist; und
- einen mit dem Trägerteil (3) insbesondere lösbar verbundenen oder verbindbaren Befestiger (8), insbesondere in Gestalt einer Befestigungsschraube,
wobei der Befestiger (8) einen Kopfbereich (15) aufweist, dessen Durchmesser größer als der Durchmesser des durch den Grundkörper (4) des Abstandhalters (1) verlaufenden Durchganges (7) ist, und einen Schaftbereich aufweist, dessen Durchmesser kleiner als der Durchmesser des durch den Grundkörper (4) des Abstandhalters (1) verlaufenden Durchganges (7) ist, wobei der Schaftbereich (13) des Befestigers (8) zumindest bereichsweise von dem Durchgang (7) aufgenommen oder aufnehmbar ist, und wobei ein dem Kopfbereich (15) des Befestigers (8) gegenüberliegender Endbereich des Schaftbereiches insbesondere kraft- und/oder formschlüssig mit dem Trägerteil (3) verbunden oder verbindbar ist.

13. Befestigungsanordnung nach Anspruch 12,
wobei die Befestigungsanordnung ferner eine in einer Öffnung, insbesondere Bohrung, des Trägerteils (3) aufgenommene oder aufnehmbare Befestigungshülse (21) aufweist, von welcher zumindest bereichsweise insbesondere der Endbereich des Schaftbereiches des Befestigers (8) insbesondere kraft- und/oder formschlüssig aufgenommen oder aufnehmbar ist.

14. Verfahren zum insbesondere schwingungsgedämpften Befestigen eines Montageteils (2) an einem Trägerteil (3), wobei das Verfahren die folgenden Verfahrensschritte aufweist:
- Bereitstellen einer Befestigungsanordnung nach Anspruch 12 oder 13;
- Ausbilden eines Befestigungsloches (18) in dem Montageteil (2), wobei das Befestigungsloch (18) vorzugsweise eine durchgehende, d.h. ununterbrochene, Umrandung aufweist;
- Montieren des Abstandhalters (1) der Befestigungsanordnung an dem Montageteil (2), und zwar indem das erste Körperteil (9) des Grundkörpers (4) des Abstandhalters (1) von einer ersten Seite auf das Befestigungsloch (18) und das zweite Körperteil (10) des Grundkörpers (4) des Abstandhalters (1) von einer zweiten Seite auf das Befestigungsloch (18) derart gesetzt und die Körperteile (9, 10) anschließend miteinander verbunden werden, dass durch das Befestigungsloch (18) ein den ersten und zweiten Flanschbereich (5, 6) des Abstandhalters (1) verbindender Schaftbereich (13) läuft; und
- Verbinden des zumindest bereichsweise durch den Durchgang (7) des Abstandhalters (1) laufenden Befestigers (8) mit dem Trägerteil (3).

## Claims

1. A spacer (1) for a fastening arrangement for fastening, in particular in a vibration-damped manner, an assembly part (2) to a carrier part (3), wherein the spacer (1) comprises an in particular annular or sleeve-like base body (4) with a first flange region (5) and a second flange region (6), which lies opposite when viewed in the longitudinal direction (L) of the base body (4), and a passage (7) that extends in particular parallel to the longitudinal direction (L), in which passage a fastener (8) that is or can be connected to the carrier part (3), in particular a screw shaft of a fastening screw, is at least partially receivable, wherein the base body (4) is configured at least in two parts and comprises a first body part (9) and at least one further second body part (10), wherein the body parts (9, 10) can be releasably connected to one another in order to form the base body (4), and wherein, in the connected state the body parts (9, 10), an in particular at least substantially annular gap region (11) is provided between the first and second flange regions (5, 6) of the base body (4), in or from which gap region the edge of a fastening hole (18) formed in the assembly part (2) is at least partially receivable, **characterized in that**
at least the first and second flange regions (5, 6) of the base body (4) are formed from a first plastic component, wherein at least in regions a surface bounding the gap region (11) is formed from a softer second plastic component compared to the first plastic component.

2. The spacer (1) according to claim 1, wherein the body parts (9, 10) of the base body (4) are formed from plastic, in particular with the aid of a multi-component injection molding method.

3. The spacer (1) according to claim 1 or 2,
wherein, in the connected state of the body parts (9, 10), the first flange region (5) comprises a surface facing towards the second flange region (6) and being in particular at least substantially annular, which, in the connected state of the body parts (9, 10), bounds the gap region (11) towards the first flange region (5), and wherein, in the connected state of the body parts (9, 10), the second flange region (6) comprises a surface facing towards the first flange region (5) and being in particular at least substantially annular, which, in the connected state of the body parts (9, 10), bounds the gap region (11) towards the second flange region (6), wherein preferably the surface of the first flange region (5) facing towards the second flange region (6) at least in the connected state of the body parts (9, 10) and/or preferably the surface of the second flange region (6) facing towards the first flange region (5) at least in the connected state of the body parts (9, 10) are equipped at least in regions with a serration (12) or with regions that project correspondingly from the surface.

4. The spacer (1) according to any one of claims 1 to 3,
wherein the first flange region (5) is formed at least in regions from a hard plastic component and comprises an edge region, which is beveled at least in regions in a direction counter to the direction of the second flange region (6) and in particular comprises an assembly ramp (20); and/or wherein the second flange region (6) is formed at least in regions from a hard plastic component and comprises an edge region, which is beveled at least in regions in a direction counter to the direction of the first flange region (5) and in particular comprises an assembly ramp (20).

5. The spacer (1) according to any one of claims 1 to 4,
wherein the first flange region (5) and/or the edge region of the first flange region (5) are formed from a first plastic component and have a shape that is selected such that a second plastic component, which is provided in particular in or on the gap region (11) and is softer in comparison to the first plastic component, is shielded from direct contact with the carrier part (3) by the first flange region (5) and/or its edge region; and/or wherein the second flange region (6) and/or the edge region of the second flange region (6) are formed from a first plastic component and have a shape that is selected such that a second plastic component, which is provided in particular in or on the gap region (11) and is softer in comparison to the first plastic component, is shielded from direct contact with the carrier part (3) by the second flange region (6) and/or its edge region.

6. The spacer (1) according to any one of claims 1 to 5,
wherein, at least in the connected state of the body parts (9, 10), the base body (4) comprises a shaft region (13) connecting the first flange region (5) to the second flange region (6) and surrounding the passage (7) at least in regions, whose diameter is smaller than the diameter of the first and second flange regions (6).

7. The spacer (1) according to claim 6,
wherein the lateral surface of the shaft region (13) radially bounds, at least in regions, the gap region (11) in view of the longitudinal direction (L) of the base body (4).

8. The spacer (1) according to claim 6 or 7,
wherein the lateral surface of the shaft region (13) is formed at least in regions from a plastic component that is softer than the plastic component from which the first and second flange regions (5, 6) of the base body (4) are formed.

9. The spacer (1) according to any one of claims 6 to 8,
wherein the lateral surface of the shaft region (13) is equipped with a serration (12) or with regions that project correspondingly from the surface.

10. The spacer (1) according to claim 3 or 9,
wherein the serration (12) or the correspondingly projecting regions are at least partially or regionally formed from a plastic component that is softer than the plastic component from which the first and second flange regions (5, 6) are formed.

11. The spacer (1) according to any one of claims 1 to 10,
wherein the body parts (9, 10) can be connected to one another, in particular releasably, via a plug connection in order to form the base body (4), wherein the first body part (9) preferably comprises at least a first plug-in connection part (14) configured as a plug part that is or can be received and the at least one second body part (10) preferably comprises at least one second plug connection part (14) configured correspondingly for this purpose; and/or
wherein the base body (4) comprises a first and an identically constructed second body part (9, 10) wherein, in order to form the base body (4), the first and identically constructed second body part (9, 10) are preferably releasably connectable to one another.

12. A fastening assembly for fastening, in particular in a vibration-damped manner, an assembly part (2) to a carrier part (3), wherein the fastening assembly comprises:
- a spacer (1) according to any one of claims 1 to 11, wherein the edge of a fastening hole (18) formed in the assembly part (2) is at least partially receivable by the gap region (11) of the spacer (1); and
- a fastener (8), in particular in the form of a fastening screw, which is or can be connected, in particular releasably, to the carrier part (3),
wherein the fastener (8) comprises a head region (15) whose diameter is larger than the diameter of the passage (7) extending through the base body (4) of the spacer (1) and a shaft region whose diameter is smaller than the diameter of the passage (7) extending through the base body (4) of the spacer (1), wherein the shaft region (13) of the fastener (8) is or can be at least partially received by the passage (7), and wherein an end region of the shaft region opposite the head region (15) of the fastener (8) is or can be connected to the carrier part (3), in particular in a force-fit and/or form-fit locking manner.

13. The fastening arrangement according to claim 12, wherein the fastening arrangement further comprises a fastening sleeve (21) that is or can be received in an opening, in particular a bore, of the carrier part (3), by which in particular the end region of the shaft region of the fastener (8) is or can be received, in particular in a force-fit and/or form-fit locking manner in particular in regions.

14. A method for fastening, in particular in a vibration-damped manner, an assembly part (2) to a carrier part (3), wherein the method comprises the following method steps:
- providing a fastening assembly according to claim 12 or 13;
- forming a fastening hole (18) in the assembly part (2), wherein the fastening hole (18) preferably comprises a continuous, i.e., uninterrupted, edge;
- assembling the spacer (1) of the fastening assembly on the assembly part (2), namely by placing the first body part (9) of the base body (4) of the spacer (1) on the fastening hole (18) from a first side and the second body part (10) of the base body (4) of the spacer (1) on the fastening hole (18) from a second side and subsequently joining the body parts (9, 10) in such a way that a shaft region (13) connecting the first and second flange region (5, 6) of the spacer (1) extends through the fastening hole (18); and
- connecting the fastener (8) extending at least in regions through the passage (7) of the spacer (1) to the carrier part (3).

## Revendications

1. Espaceur (1) pour un agencement de fixation pour la fixation, en particulier de manière amortissant les vibrations, d'une partie d'assemblage (2) à une partie de support (3), dans lequel l'espaceur (1) comprend un corps de base (4) en particulier annulaire ou en forme de douille avec une première zone de bride (5) et une deuxième zone de bride (6), qui est opposée lorsqu'elle est vue dans la direction longitudinale (L) du corps de base (4), et un passage (7) qui s'étend en particulier parallèlement à la direction longitudinale (L), dans lequel passage un élément de fixation (8) qui est ou peut être relié à la partie de support (3), en particulier une tige de vis d'une vis de fixation, est au moins partiellement recevable, dans lequel le corps de base (4) est configuré au moins en deux parties et comprend une première partie de corps (9) et au moins une deuxième partie de corps supplémentaire (10), dans lequel les parties de corps (9, 10) peuvent être reliées de manière amovible l'une à l'autre de manière à former le corps de base (4), et dans lequel, dans l'état relié des parties de corps (9, 10), une zone d'espacement (11) au moins sensiblement annulaire en particulier est fournie entre les première et deuxième zones de bride (5, 6) du corps de base (4), dans ou à partir de laquelle zone d'espacement, le bord d'un trou de fixation (18) formé dans la partie d'assemblage (2) est au moins partiellement recevable, **caractérisé en ce que**
au moins la première et la deuxième zones de bride (5, 6) du corps de base (4) sont formées à partir d'un premier élément en plastique, dans lequel au moins dans des zones une surface délimitant la zone d'espacement (11) est formée à partir d'un deuxième élément en plastique plus souple comparé au premier élément en plastique.

2. Espaceur (1) selon la revendication 1, dans laquelle les parties de corps (9, 10) du corps de base (4) sont réalisées à partir de plastique, en particulier à l'aide d'un procédé de moulage par injection à plusieurs éléments.

3. Espaceur (1) selon la revendication 1 ou 2,
dans lequel, dans l'état relié des parties de corps (9, 10), la première zone de bride (5) comprend une surface faisant face à la deuxième zone de bride (6) et étant en particulier au moins sensiblement annulaire, qui, dans l'état relié des parties de corps (9, 10), délimite la zone d'espacement (11) vers la première zone de bride (5), et dans lequel, dans l'état relié des parties de corps (9, 10), la deuxième zone de bride (6) comprend une surface faisant face à la première zone de bride (5) et étant en particulier au moins sensiblement annulaire, qui, dans l'état relié des parties de corps (9, 10), délimite la zone d'espacement (11) vers la deuxième zone de bride (6), dans lequel, de préférence, la surface de la première zone de bride (5) faisant face vers la deuxième zone de bride (6) au moins dans l'état relié des parties de corps (9, 10) et/ou de préférence la surface de la deuxième zone de bride (6) faisant face vers la première zone de bride (5) au moins dans l'état relié des parties de corps (9, 10) sont équipées, au moins dans certaines zones, d'une dentelure (12) ou de zones faisant saillie de manière correspondante à partir de la surface.

4. Espaceur (1) selon l'une quelconque des revendications 1 à 3,
dans lequel la première zone de bride (5) est formée au moins dans des zones à partir d'un élément en plastique dur et comprend une zone de bord, qui est biseautée au moins dans des zones dans une direction opposée à la direction de la deuxième zone de bride (6) et comprend en particulier une rampe d'assemblage (20) ; et/ou
dans lequel la deuxième zone de bride (6) est formée au moins dans des zones à partir d'un élément en plastique dur et comprend une zone de bord, qui est biseautée au moins dans des zones dans une direction opposée à la direction de la première zone de bride (5) et comprend en particulier une rampe d'assemblage (20).

5. Espaceur (1) selon l'une quelconque des revendications 1 à 4,
dans lequel la première zone de bride (5) et/ou la zone de bord de la première zone de bride (5) sont formées à partir d'un premier élément en plastique et ont une forme qui est sélectionnée de sorte qu'un deuxième élément en plastique, qui est fourni en particulier dans ou sur la zone d'espacement (11) et qui est plus souple en comparaison au premier élément en plastique, est protégé du contact direct avec la partie de support (3) par la première zone de bride (5) et/ou sa zone de bord ; et/ou dans lequel la deuxième zone de bride (6) et/ou la zone de bord de la deuxième zone de bride (6) sont formées à partir d'un premier élément en plastique et ont une forme qui est sélectionnée de sorte qu'un deuxième élément en plastique, qui est fourni en particulier dans ou sur la zone d'espacement (11) et qui est plus souple en comparaison au premier élément en plastique, est protégé du contact direct avec la partie de support (3) par la deuxième zone de bride (6) et/ou sa zone de bord.

6. Espaceur (1) selon l'une quelconque des revendications 1 à 5,
dans lequel, au moins dans l'état relié des parties de corps (9, 10), le corps de base (4) comprend une zone de tige (13) reliant la première zone de bride (5) à la deuxième zone de bride (6) et entourant le passage (7) au moins dans des zones, dont le diamètre est inférieur au diamètre des première et deuxième zones de bride (6).

7. Espaceur (1) selon la revendication 6,
dans lequel la surface latérale de la zone de tige (13) délimite radialement, au moins dans des zones, la zone d'espacement (11) en vue de la direction longitudinale (L) du corps de base (4).

8. Espaceur (1) selon la revendication 6 ou 7,
dans lequel la surface latérale de la zone de tige (13) est formée au moins dans des zones à partir d'un élément en plastique qui est plus souple que l'élément en plastique à partir duquel les première et deuxième zones de bride (5, 6) du corps de base (4) sont formées.

9. Espaceur (1) selon l'une quelconque des revendications 6 à 8,
dans lequel la surface latérale de la zone de tige (13) est équipée d'une dentelure (12) ou de zones qui font saillie de manière correspondante à partir de la surface.

10. Espaceur (1) selon la revendication 3 ou 9,
dans lequel la dentelure (12) ou les zones faisant saillie correspondantes sont au moins partiellement ou localement formées à partir d'un élément en plastique qui est plus souple que l'élément en plastique à partir duquel les première et deuxième zones de bride (5, 6) sont formées.

11. Espaceur (1) selon l'une quelconque des revendications 1 à 10,
dans lequel les parties de corps (9, 10) peuvent être reliées l'une à l'autre, en particulier de manière amovible, via une liaison par enfichage de manière à former le corps de base (4), dans lequel la première partie de corps (9) comprend de préférence au moins une première partie de liaison par enfichage (14) configurée comme une partie de liaison qui est ou peut être reçue et l'au moins une deuxième partie de corps (10) comprend de préférence au moins une deuxième partie de liaison par enfichage (14) configurée de manière correspondante à cet effet ; et/ou
dans lequel le corps de base (4) comprend une première et une deuxième partie de corps de construction identique (9, 10), dans lequel, de manière à former le corps de base (4), la première et la deuxième partie de corps de construction identique (9, 10) peuvent de préférence être reliées l'une à l'autre de manière amovible.

12. Ensemble de fixation pour la fixation, en particulier de manière amortissant les vibrations, d'une partie d'assemblage (2) à une partie de support (3), dans lequel l'ensemble de fixation comprend :
- un espaceur (1) selon l'une quelconque des revendications 1 à 11, dans lequel le bord d'un trou de fixation (18) formé dans la partie d'assemblage (2) peut être reçu au moins partiellement par la zone d'espacement (11) de l'espaceur (1) ; et
- un élément de fixation (8), en particulier sous la forme d'une vis de fixation, qui est ou peut être relié, en particulier de manière amovible, à la partie de support (3),
dans lequel l'élément de fixation (8) comprend une zone de tête (15) dont le diamètre est supérieur au diamètre du passage (7) s'étendant à travers le corps de base (4) de l'espaceur (1) et une zone de tige dont le diamètre est inférieur au diamètre du passage (7) s'étendant à travers le corps de base (4) de l'espaceur (1), dans lequel la zone de tige (13) de l'élément de fixation (8) est ou peut être reçue au moins partiellement par le passage (7), et dans lequel une zone d'extrémité de la zone de tige opposée à la zone de tête (15) de l'élément de fixation (8) est ou peut être reliée à la partie de support (3), en particulier dans un type de verrouillage de force et/ou de forme.

13. Agencement de fixation selon la revendication 12, dans lequel l'agencement de fixation comprend en outre une douille de fixation (21) qui est ou peut être reçue dans une ouverture, en particulier un alésage, de la partie de support (3), par laquelle en particulier la zone d'extrémité de la zone de tige de l'élément de fixation (8) est ou peut être reçue, en particulier dans un type de verrouillage de force et/ou de forme en particulier dans des zones.

14. Procédé de fixation, en particulier de manière amortissant les vibrations, d'une partie d'assemblage (2) à une partie de support (3), dans lequel le procédé comprend les étapes suivantes :
- la fourniture d'un ensemble de fixation selon la revendication 12 ou 13 ;
- la formation d'un trou de fixation (18) dans la partie d'assemblage (2), dans lequel le trou de fixation (18) comprend de préférence un bord continu, c'est-à-dire ininterrompu ;
- l'assemblage de l'espaceur (1) de l'ensemble de fixation sur la partie d'assemblage (2), à savoir par le placement de la première partie de corps (9) du corps de base (4) de l'espaceur (1) sur le trou de fixation (18) à partir d'un premier côté et la deuxième partie de corps (10) du corps de base (4) de l'espaceur (1) sur le trou de fixation (18) à partir d'un deuxième côté et ensuite par l'assemblage des parties de corps (9, 10) de telle sorte qu'une zone de tige (13) reliant la première et la deuxième zones de bride (5, 6) de l'espaceur (1) s'étend à travers le trou de fixation (18) ; et
- la liaison de l'élément de fixation (8) s'étendant au moins dans des zones à travers le passage (7) de l'espaceur (1) à la partie de support (3).
